# EUROPEAN PATENT APPLICATION

(11) **EP 3 166 117 A1**
(43) Date of publication of application: **10.05.2017**
(21) Application number: 16196397.0
(22) Date of filing: 28.10.2016
(51) Int. Cl.: H01G 9/08, H01G 9/06, H01G 9/14, H01G 9/26

(54) **HIGH VOLTAGE DUAL ANODE TANTALUM CAPACITOR WITH FACING CASING CLAMSHELLS CONTACTING AN INTERMEDIATE PARTITION**

(30) Priority: 30.10.2015 US 201562248842 P
(71) Applicant: Greatbatch Ltd., Clarence, NY 14031 (US)
(72) Inventor: Perez, Anthony C., Wheatfield, NY 14120 (US); Sutay, Todd C., Warsaw, NY 14569 (US); Muffoletto, Mark T., Darien Center, NY 14040 (US)
(74) Representative: Duckett, Anthony Joseph

(57) **Abstract**

A wet tantalum capacitor of a dual anode design is described. The anodes are housed in their own casing compartments, which are separated from each other by an intermediate partition. Preferably, the casing comprises two clamshell-shaped members that house respective anodes. The clamshells face each other, but are prevented from direct contact by the intermediate partition. The clamshells are welded to opposite sides of the partition to hermetically seal the casing. Prior to sealing, however, cathode active material is contacted to inner face walls of the clamshells and the opposite sides of the partition. The cathode active material is aligned in a face-to-face relationship with major surfaces of the anodes. Preferably, a polymeric restraining device prevents the anode from contacting the case. The hermetically sealed casing is filled with electrolyte thru a port. The fill port is hermetically sealed to complete the capacitor.

## Description

### CROSS-REFERENCE TO RELATED APPLICATION

This application claims priority to U.S. provisional patent application Serial No. 62/248,842, filed on October 30, 2015.

### BACKGROUND OF THE INVENTION

The present invention generally relates to a capacitor, and more particularly, to a capacitor having a cathode spaced from an anode. The cathode is of an active material supported on a casing sidewall or a conductive substrate/partition in contact with the casing sidewall. The anode is typically in the form of a sintered valve metal pellet, such as a sintered tantalum pellet that has been anodized. The anode and cathode are kept from direct physical contact with each other by a separator. A working electrolyte filled into the casing serves as an ionic transport for charging and discharging the capacitor.

### SUMMARY OF THE INVENTION

The present invention is directed to a capacitor having at least two anodes, each preferably in the form of a tantalum pellet housed inside a casing compartment. The casing preferably includes two shallow-drawn casing portions, each housing one of the anode pellets and each in the shape of a clamshell having their annular rims facing each other. Unlike conventional capacitor designs, the two casing clamshells do not contact each other. Instead, an intermediate partition in the shape of a wall or lid is provided between the casing clamshell portions. The intermediate partition is sized and shaped so that the clamshell rims butt-up to its opposite sides. Further, major face walls of the clamshells as well as opposed major surface of the intermediate partition support cathode active material thereon. The clamshell rims are hermetically secured to the intermediate partition by a perimeter weld to thereby seal the casing. Preferably, the main body of the intermediate partition serving as a cathode current collector supporting cathode active material is perforated while the surrounding perimeter frame of the partition welded to the spaced apart clamshells is not.

The casing is filled with electrolyte thru a port and hermetically sealed. Preferably, the anode pellets have their own feedthrough, which electrically isolate the respective anode leads from the casing. The feedthrough leads are electrically connected in parallel outside the casing to provide one terminal for the capacitor. The casing serves as the other terminal.

These and other objects of the present invention will become increasingly more apparent to those skilled in the art by reference to the following detailed description and the appended drawings.

### BRIEF DESCRIPTION OF THE DRAWINGS

FIG. 1 is a perspective view looking at the left edge of a dual anode capacitor 10 according to the present invention.
FIG. 2 is a cross-sectional view of the capacitor 10 illustrated in FIG. 1.
FIG. 3 is a side elevational view, partly in phantom, of the dual anode capacitor 10 of FIG. 1.
FIG. 4 is a cross-sectional view of the dual anode capacitor 10 shown in FIG. 1 and illustrating in enlarged detail the positioning of the cathode active material 16 with respect to the anodes 12, 14.

The present invention will be described in connection with preferred embodiments, however, it will be understood that there is no intent to limit the invention to the embodiments described. On the contrary, the intent is to cover all alternatives, modifications, and equivalents as may be included within the spirit and scope of the invention as defined by the appended claims.

### DETAILED DESCRIPTION OF THE PREFERRED EMBODIMENTS

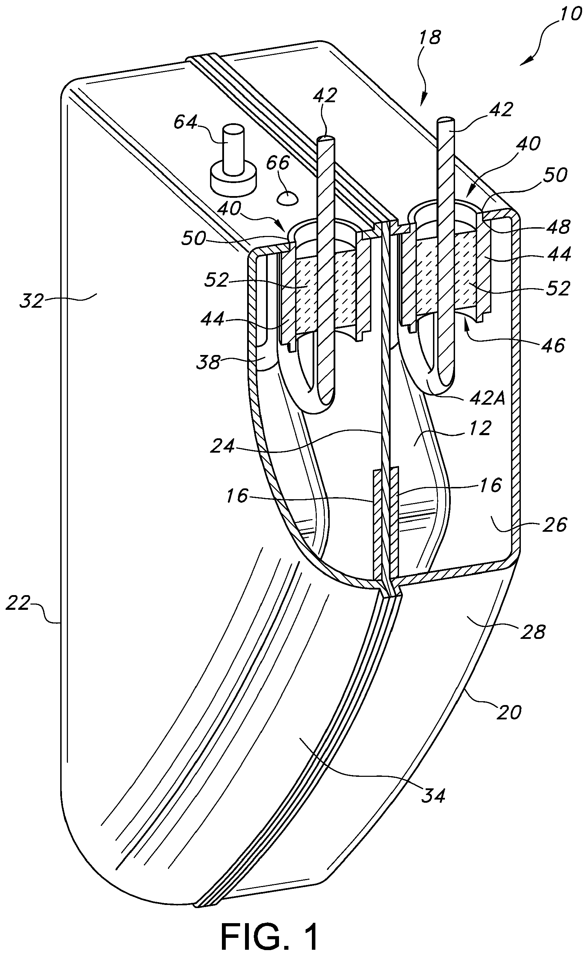

As shown in FIGs. 1 to 4, a first embodiment of a capacitor 10 according to the present invention comprises a first anode 12 of a first anode active material, a second anode 14 of a second anode active material, and a cathode of a cathode active material 16 housed inside a hermetically sealed casing 18. Preferably, the first and second anodes are of the same active material. The capacitor 10 can be of either an electrochemical type wherein the anode and the cathode are provided by conductive substrates having a capacitive material contacted thereto or, an electrolytic type wherein the cathode is provided by a conductive substrate having capacitive properties where the anode is of a valve metal. The illustrated capacitor 10 is preferably of the latter type, however, that should not be construed as limiting. The capacitor electrodes are operatively associated with each other by an electrolyte (not shown) contained inside the casing 18.

Casing 18 is of metal material comprising first and second clamshell portions 20 and 22. As will be described in detail hereinafter, a novel aspect of the present invention is that the clamshells 20 and 22 do not contact each other, but, instead, contact the opposite sides of an intermediate partition or lid serving as a cathode current collector 24 supporting cathode active materials 16 thereon.

The casing clamshells 20, 22 and the electrically conductive intermediate partition serving as the cathode current collector 24 are made of a conductive metal selected from the group consisting of tantalum, titanium, nickel, niobium, stainless steel, aluminum, zirconium, and mixtures and alloys thereof. Regardless the metal, the clamshells 20, 22 have a thickness of about 0.015 to about 0.5 millimeters and together with the current collector 24 serves as one terminal or contact for making electrical connection between the capacitor and its load.

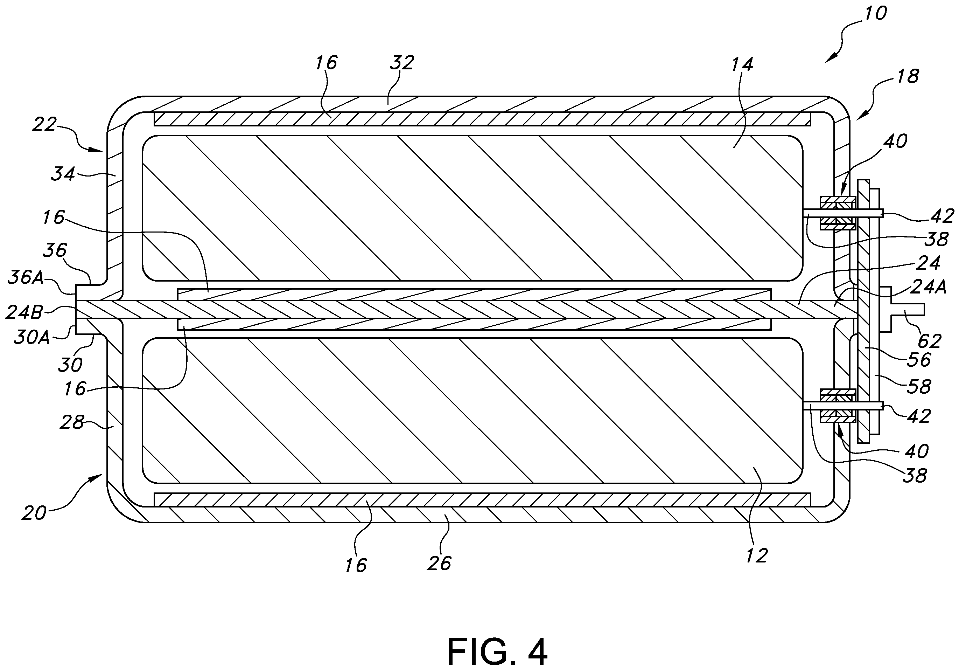

In greater detail, the first clamshell 20 comprises a face wall 26 joined to a surrounding sidewall 28 extending to an outwardly extending rim 30 having a rim outer edge 30A. Similarly, the second clamshell 22 comprises a face wall 32 joined to a surrounding sidewall 34 extending to an outwardly extending rim 36 having a rim outer edge 36A. The clamshells 20, 22 are sized so that their rims 30, 36 butt-up to opposite sides of the intermediate partition serving as the cathode current collector 24. While not shown in the drawings, the clamshell rims 30, 36 are hermetically secured to the cathode current collector 24 by a perimeter weld to thereby seal the casing 18. Preferably, the main body of the current collector 24 is perforated while a surrounding perimeter frame 24A (FIG. 4) is not. That way, the clamshells 20, 22 sandwiching the intermediate cathode current collector partition 24 serve as compartments for the respective anodes 12, 14.

Accordingly, the cathode current collector 24 is sized and shaped so that an outer perimeter edge 24B of the unperforated perimeter frame 24A is substantially coincident with the outer edges 30A, 36A of the clamshell rims 30, 36. It should be understood, however, that the present invention is not limited to the outer rim edges 30A and 36A being precisely aligned one above the other with respect to the outer perimeter edge 24B of the current collector. Instead, the respective edges are aligned one above the other to a degree that is sufficient to weld completely around the perimeter of the rims and current collector edge to thereby secure the clamshells 20, 22 together, sandwiching the current collector 24 therebetween in a hermetically sealed manner. This weld is provided by any conventional means; however, a preferred method is by laser welding.

The active material of the anodes 12 and 14 is typically of a metal in the form of a pellet. The anode metal is selected from the group consisting of tantalum, aluminum, titanium, niobium, zirconium, hafnium, tungsten, molybdenum, vanadium, silicon, germanium, and mixtures thereof. As is well known by those skilled in the art, the anode metal in powdered form, for example tantalum powder, is compressed into a pellet having an anode lead 38 (FIGs. 1 to 3) embedded therein and extending there from. The anode conductor or lead 38 preferably comprises the same material as the anodes 12, 14. The anodes 12, 14 can also be of an etched aluminum or titanium foil.

A preferred tantalum material and method of manufacturing an anode pellet for the present capacitor 10, which is well suited for implantable cardiac device capacitor applications, is described in U.S. Patent No. 9,312,075 to Liu et al., which is assigned to the assignee of the present invention and incorporated herein by reference. Other suitable capacitor grade tantalum powders are described in U.S. Patent No. 9,312,075 to Liu et al., which is assigned to the assignee of the present invention and incorporated herein by reference.

Before pressing, the tantalum powder is typically, but not necessarily, mixed with approximately 0 to 5 percent of a binder such as ammonium carbonate. This and other binders can be used to facilitate metal particle adhesion and die lubrication during anode pressing. The powder and binder mixture are dispended into a die cavity and pressed to a density ranging from about 4 grams/cc³ to about 8 grams/cc³. The binder is then removed from the anode pellets 12, 14 either by washing in warm deionized water or by heating at a temperature sufficient to decompose the binder. Complete binder removal is desirable since residuals may result in high leakage current. The washed anode pellets with extending leads 38 are then vacuum-sintered at between about 1,350°C to about 1,600°C to permanently bond the metal anode particles.

An oxide is formed on the surface of the sintered anode pellets 12, 14 and their leads 38 by immersing them in an electrolyte and applying a current. The electrolyte includes constituents such as water and phosphoric acid and perhaps other organic solvents. The application of current drives the formation of an oxide film that is proportional in thickness to the targeted forming voltage. A pulsed formation process may be used wherein current is cyclically applied and removed to allow diffusion of heated electrolyte from the internal pores of the anodes. Intermediate washing and annealing steps may be performed to facilitate the formation of a stable, defect free, oxide. Preferably, the anode pellets 12, 14 and extending leads 38 are anodized to a formation voltage that is greater than zero up to 550 V.

Cathode active material 16 having a thickness of about a few hundred Angstroms to about 0.1 millimeters is directly coated on the inner surface of the clamshell face walls 26, 32 or, the cathode active material is coated on a conductive substrate (not shown) in electrical contact with the inner surface of the face walls, spaced from the respective sidewalls 28, 34. Another portion of the cathode active material 16 is supported on the opposed perforated major surfaces of the current collector 24, but spaced from the unperforated perimeter frame 24A.

These coatings are accomplished by providing the conductive face walls 26, 32 and the perimeter current collector frame 24A with a masking material in a known manner so that only intended areas of the clamshell face walls 26, 32 and cathode current collector 24 are contacted with active material. The masking material is removed from the face walls 26, 32 and current collector frame 24A prior to capacitor fabrication. Preferably, the cathode active material 16 is substantially aligned in a face-to-face, but spaced apart relationship with the major faces of the anodes 12, 14.

As disclosed in U.S. Patent No. 7,116,547 to Seitz et al., a preferred coating process is by pad printing. This patent is assigned to the assignee of the present invention and incorporated herein by reference. An ultrasonically generated aerosol, as described in U.S. Patent Nos. 5,894,403, 5,920,455, 6,224,985, and 6,468,605, all to Shah et al., is also suitable for making a coating of the active materials. These patents and the Seitz et al. patent are assigned to the assignee of the present invention and incorporated herein by reference. In that manner, the ultrasonically generated active material contacted to the conductive surfaces of the clamshell face walls 26, 32 and current collector 24 has a majority of its particles with diameters of less than about 10 microns. This provides an internal surface area for the active material of about 10 m²/gram to about 1,500 m²/gram.

In various embodiments, the face walls 26, 32 and the current collector 24 may be of an anodized-etched conductive material, have a sintered active material with or without oxide contacted thereto, be contacted with a double layer capacitive material, for example a finely divided carbonaceous material such as graphite, carbon, activated carbon or platinum black, a redox, pseudocapacitive or an under potential material, or be an electroactive conducting polymer such as polyaniline, polypyrrole, polythiophene, and polyacetylene, and mixtures thereof.

According to one preferred aspect of the present invention, the redox or cathode active material 16 includes an oxide of a first metal, the nitride of the first metal, the carbon nitride of the first metal, and/or the carbide of the first metal, the oxide, nitride, carbon nitride and carbide having pseudocapacitive properties. The first metal is preferably selected from the group consisting of ruthenium, cobalt, manganese, molybdenum, tungsten, tantalum, iron, niobium, iridium, titanium, zirconium, hafnium, rhodium, vanadium, osmium, palladium, platinum, nickel, and lead.

The cathode active material 16 may also include a second or more metals. The second metal is in the form of an oxide, a nitride, a carbon nitride or carbide, and is not essential to the intended use of the conductive face walls 26, 32 and the intermediate current collector 24 as a capacitor electrode. The second metal is different than the first metal and is selected from one or more of the group consisting of tantalum, titanium, nickel, iridium, platinum, palladium, gold, silver, cobalt, molybdenum, ruthenium, manganese, tungsten, iron, zirconium, hafnium, rhodium, vanadium, osmium, and niobium. In a preferred embodiment of the invention, the cathode active material 16 includes an oxide of ruthenium.

The cathode active material 16 may also be selected from graphitic or glassy carbon on titanium carbide, carbon and silver vanadium oxide on titanium carbide, carbon and crystalline manganese dioxide on titanium carbide, platinum on titanium, ruthenium on titanium, barium titanate on titanium, carbon and crystalline ruthenium oxide on titanium carbide, carbon and crystalline iridium oxide on titanium carbide, silver vanadium oxide on titanium, and activated carbon.

A separator (not shown) of electrically insulative material is provided between the anodes 12 and 14 and the cathode active materials 16 to prevent an internal electrical short circuit between the electrodes. The separator is chemically unreactive with the anode and cathode active materials and both chemically unreactive with and insoluble in the electrolyte. In addition, the separator material has a degree of porosity sufficient to allow flow therethrough during charging and discharging of the capacitor 10.

Illustrative separator materials include woven and non-woven fabrics of polyolefinic fibers including polypropylene and polyethylene, or fluoropolymeric fibers including polyvinylidene fluoride, polyethylenetetrafluoroethylene, and polyethylenechlorotrifluoroethylene laminated or superposed with a polyolefinic or fluoropolymeric microporous film, non-woven glass, glass fiber materials and ceramic materials. Suitable microporous films include a polyethylene membrane commercially available under the designation SOLUPOR^{®}, (DMS Solutech); a polytetrafluoroethylene membrane commercially available under the designation ZITEX^{®}, (Chemplast Inc.) or EXCELLEPATOR^{®}, (W.L. Gore and Associates); a polypropylene membrane commercially available under the designation CELGARD^{®}, (Celgard LLC); and a membrane commercially available under the designation DEXIGLAS^{®}, (C. H. Dexter, Div., Dexter Corp.). Cellulose based separators also typically used in capacitors are contemplated by the scope of the present invention. Depending on the electrolyte used, the separator can be treated to improve its wettability, for example with a surfactant, as is well known by those skilled in the art.

As shown in FIG. 1 to 3, the lead 38 for each anode 12 and 14 are electrically insulated from the casing 16 by respective insulator and seal structures, for example a glass-to-metal-seal 40. The insulator and seal structures each comprise a conductor or feedthrough lead 42 connected to the anode lead 38 extending from each of the anodes 12, 14. The glass-to-metal seal 40 comprises a ferrule 44 defining an internal cylindrical through bore or passage 46. An annular step 48 provided at the upper end is of an outer diameter sized to fit in a closely spaced relationship in an annular opening 50 in the casing clamshell sidewalls 28, 34 with the remaining body of the ferrule butted against the inner surface of the sidewall. The ferrule 44 is secured therein by welding, and the like.

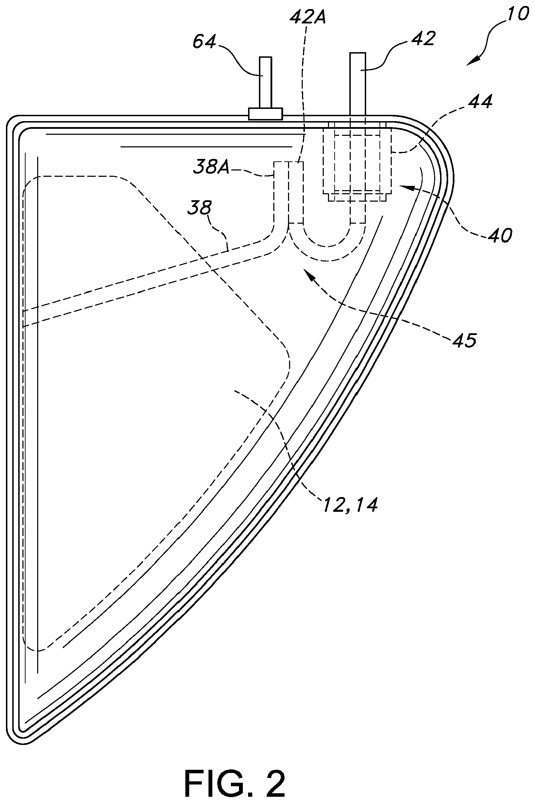

As shown in FIG. 2, the anodes 12, 14 each have a notch 45 that provides clearance for the glass-to-metal seal 40. The anode wire 38 embedded in the anode active material extends outwardly from this notch and has a distal end 38A bent into a position generally parallel to the longitudinal axis of ferrule 44. A proximal end 42A of the feedthrough lead 42 is bent into a J-hook shape to align parallel with the distal end 38A of the anode wire 38. The distal end 38A of the anode wire is then welded to the proximal end 42A of the feedthrough lead to electrically connect the anode to the feedthrough lead 42.

An insulative glass 52 provides a hermetic seal between the inside of the ferrule 44 and the anode feedthrough lead 42. The glass is, for example, ELAN^{®} type 88 or MANSOL™ type 88. Alternatively, member 52 is not a glass, but, instead, a synthetic polymeric material such as elastomeric materials that are capable of sealing between feedthrough lead 42 and the inner surface of ferrule 44. A suitable polymeric material for the layer 52 is, for example Master-Sil 151 made by Master Bond. While such a seal structure using only a synthetic polymeric material is not necessarily hermetic, acceptable isolation of the electrolyte from inside of the casing 18 to the outside thereof is provided by the polymer layer 52.

The anode lead 38 and feedthrough lead 42 preferably comprise the same material as the anode active material. In that manner, the portion of the feedthrough lead 42 extending outside the capacitor 10 is hermetically sealed from the interior of the capacitor and insulated from the mating casing portions 20, 22 serving as the terminal for the cathode electrode.

The capacitor 10 illustrated in FIGs. 1 and 2 has the feedthrough leads 42 for each anode 12, 14 unconnected to each other. This means that the respective anodes 12, 14 are capable of being charged independently of each other. This could take the form of charging one of the anodes partially or completely to a rated voltage, and then charging the other anode. In other situations, it might be preferred to charge one of the anodes at a rate that is different than that at which the second anode is charged. For example, a pulse current could charge one of the anodes while the other is charged by constant power charging. An advantage of separately connecting the anodes 12, 14 to an external charging circuit is that charging or discharging currents can be distributed over the several feedthroughs, which allows smaller, more flexible leads and connections than one lead with an equivalent current carrying capacity.

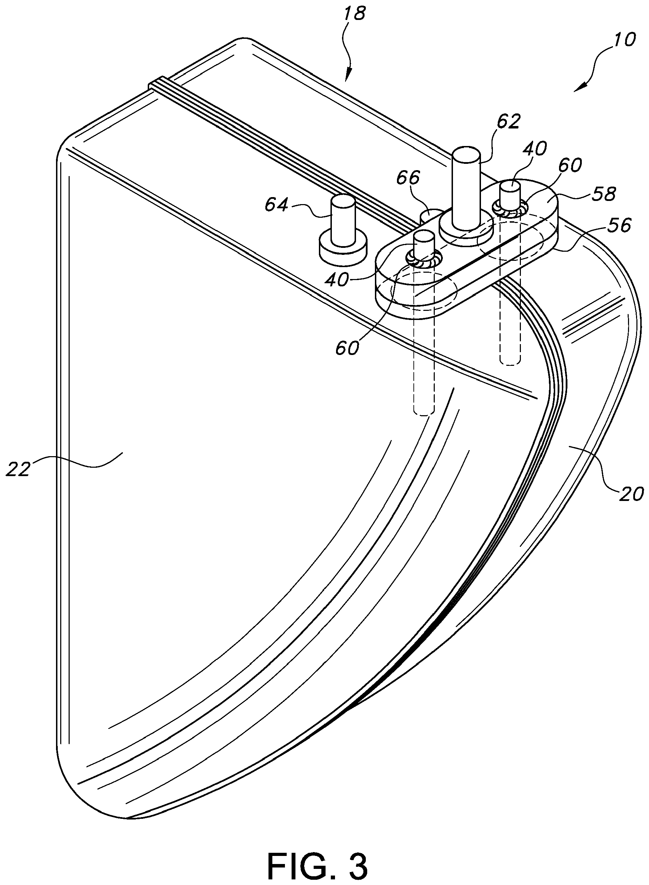

FIGs. 3 and 4 show an alternate embodiment where the feedthrough leads 42 for the respective anodes 12, 14 are electrically connected to a common positive polarity terminal 62. This is accomplished by first mounting an insulator 56 having spaced apart openings sized to receive the respective feedthrough leads 42 when resting on the casing clamshell sidewalls 26, 32. A bridge 58 of a conductive material, for example, nickel, is then supported on the insulator 56. The bridge has a pair of openings that surround the respective feedthrough leads 42. The bridge 58 is secured to the leads 42 by respective welds 60 to electrically connect them together. Finally, the common positive terminal 62 is electrically connected to bridge 58. The terminal 62 has an enlarged base that is positioned about at the midpoint on the bridge between the feedthrough leads 42. In that manner, the terminal 62 is aligned along a common axis with the feedthrough leads 42 and electrically secured thereto, such as by welding or soldering. The bridge can also be crimped onto the feedthrough leads 42 by applying a force that deforms the bridge from opposed directions onto the feedthroughs.

A fill opening or port in the casing 16 is provided for filing a working electrolyte (not shown) into the capacitor 10, after which this opening is sealed with a closure member 66, which is preferably welded in place. A suitable working electrolyte for the capacitor 10 is described in U.S. Patent No. 6,219,222 to Shah et al., which includes a mixed solvent of water and ethylene glycol having an ammonium salt dissolved therein. U.S. Patent No. 6,687,117 and U.S. Patent Application Pub. No. 2003/0090857, both to Liu et al., describe other electrolytes that are useful with the present capacitor 10. The electrolyte of the latter publication comprises water, a watersoluble inorganic and/or organic acid and/or salt, and a watersoluble nitro-aromatic compound while the former relates to an electrolyte having de-ionized water, an organic solvent, isobutyric acid and a concentrated ammonium salt. These patents and publications are assigned to the assignee of the present invention and incorporated herein by reference.

Filling is accomplished by placing the capacitor 10 in a vacuum chamber such that the electrolyte fill port extends into a reservoir of electrolyte. When the chamber is evacuated, pressure is reduced inside the capacitor. When the vacuum is released, pressure inside the capacitor re-equilibrates, and electrolyte is drawn through the fill port into the capacitor.

The capacitor 10 is now connectable to a load (not shown) as a power source. That is done by connecting the load to a negative polarity casing terminal pin 64 and the common positive terminal 62.

Capacitor 10 of the present invention is not limited to dual anode designs. Instead, the capacitor may comprise additional anodes and cathode current collectors including cathode active material on the current collector faces thereof. Moreover, while not shown in the drawings, a molded polymeric cradle or restraint is preferably provided for containing the anodes 12, 14 in the desired position should the capacitor 10 experience high shock and vibration conditions. Suitable restraints are described in U.S. Patent Nos. 7,085,126 to Muffoletto et al. and 7.092,242 to Gloss et al., which are assigned to the assignee of the present invention and incorporated herein by reference.

Although several embodiments of the invention have been described in detail, for purposes of illustration, various modifications of each may be made without departing from the spirit and scope of the invention. Accordingly, the invention is not to be limited, except as by the appended claims.

## Claims

1. A capacitor, comprising:
a) a first casing member comprising a first major face wall joined to a first surrounding sidewall extending to a first annular edge;
b) a first cathode active material supported by and in electrical contact with at least a first inner face wall of the first casing member;
c) a first anode contained in the first casing member spaced from the first cathode active material;
d) a second casing member comprising a second major face wall joined to a second surrounding sidewall extending to a second annular edge;
e) a second cathode active material supported by and in electrical contact with at least a second inner face wall of the second casing member;
f) a second anode contained in the second casing member spaced from the second cathode active material;
g) a separator preventing direct physical contact between the first and second anodes and the first and second cathode active materials supported on the respective first and second inner casing face walls while allowing for ion flow therethrough;
h) a partition having opposed first and second major partition surfaces extending to an annular partition edge, wherein the first annular edge of the first casing member is contacted to the first major partition surface, and the second annular edge of the second casing member is contacted to the second major partition surface; and
i) a working electrolyte contacting the first and second cathode active materials and the first and second anodes.

2. The capacitor of claim 1 wherein the first surrounding sidewall of the first casing member includes a first outwardly extending rim leading to the first annular edge, and the second surrounding sidewall of the second casing member includes a second outwardly extending rim leading to the second annular edge, and wherein the outer edges of the first and second casing members and the annular partition edge are welded together to thereby sandwich the partition between the first and second casing members in a hermetically sealed manner.

3. The capacitor of claim 1 or claim 2 wherein the partition has a third cathode active material supported by and in electrical contact with its opposed first and second major partition surfaces so that the partition serves as a cathode current collector.

4. The capacitor of any of claims 1 to 3 wherein the first and second anodes comprise tantalum.

5. The capacitor of any of claims 1 to 4 wherein the first and second anodes are sintered tantalum pellets that are characterized as having been anodized to a formation voltage that is greater than zero up to 550 V.

6. The capacitor of claim 3 wherein the first, second and third cathode active materials comprise ruthenium oxide.

7. The capacitor of any of claims 1 to 6 wherein the second anode is electrically connected in parallel with the first anode.

8. The capacitor of any of claims 1 to 7 wherein an insulative seal comprising a feedthrough lead is electrically connected to at least the first anode, and wherein the feedthrough lead extends outside the casing and is electrically isolated from the casing to thereby serve as the anode terminal.

9. The capacitor of claim 8 wherein the insulative seal is a hermetic seal comprising a sealing glass.

10. The capacitor of claim 8 wherein the insulative seal comprises a polymeric sealing material contacting the feedthrough lead and a ferrule supported in the casing, but the insulative seal does not have a sealing glass.

11. A method for providing a capacitor, comprising the steps of:
a) providing a first casing member comprising a first major face wall joined to a first surrounding sidewall extending to a first annular edge;
b) providing a first cathode active material in electrical contact with at least a first inner face wall of the first casing member;
c) positioning a first anode in the first casing member spaced from the first cathode active material;
d) providing a second casing member comprising a second major face wall joined to a second surrounding sidewall extending to a second annular edge;
e) providing a second cathode active material in electrical contact with at least a second inner face wall of the second casing member;
f) positioning a second anode in the second casing member spaced from the second cathode active material;
g) providing a partition having opposed first and second major partition surfaces extending to an annular partition edge, and contacting the first annular edge of the first casing member to the first major partition surface and the second annular edge of the second casing member to the second major partition surface to thereby form a casing; and
h) filling a working electrolyte into the casing so that the electrolyte contacts the first and second cathode active materials and the first and second anodes.

12. The method of claim 11 including positioning a separator between the first and second anodes and the first and second cathode active materials supported on the respective first and second inner casing face walls.

13. The method of claim 11 or claim 12 including providing the first surrounding sidewall of the first casing member comprising a first outwardly extending rim leading to the first annular edge, and the second surrounding sidewall of the second casing member comprising a second outwardly extending rim leading to the second annular edge, and welding the outer edges of the first and second casing members and the annular partition edge together to thereby sandwich the partition between the first and second casing members in a hermetically sealed manner.

14. The method of any of claims 11 to 13 including providing the partition supporting a third cathode active material in electrical contact with its opposed first and second major partition surfaces.
